# EUROPEAN PATENT APPLICATION

(11) **EP 2 101 508 A1**
(43) Date of publication of application: **16.09.2009**
(21) Application number: 08004489.4
(22) Date of filing: 11.03.2008
(51) Int. Cl.: H04Q 3/00, H04W 28/02

(54) **Methods of advanced call gapping and systems thereof**

(71) Applicant: Nokia Siemens Networks Oy, 02610 Espoo (FI)
(72) Inventor: The designation of the inventor has not yet been filed
(74) Representative: Krombach, Rainer

(57) **Abstract**

A method of call traffic control during network overload in a wireless telecommunication network (100) is provided. The wireless telecommunication network (100) comprises a core network (130) and an intelligent network (170). The core network (130) further comprises a packet-switched subsystem (150) for handling packet-switched calls. The method comprises the steps of detecting a user trigger set by the core network (130), detecting network load status by the intelligent network (170), sending at least one call-gap message from the intelligent network (170) to the core network (130) upon detection of network overload, and activating and executing call traffic control by the core network (130) in accordance with the content of the at least one call-gap message.

## Description

The present application relates to cellular service control and processing in Intelligent Networks. More particularly, call-gapping message related information elements used in the GSM (Global System for Mobile Communications service) control and switching points are enhanced to enable selective call gapping for general packet radio service, and allow call processing during call gapping periods.

Operators of cellular networks generally seek to provide enhanced functionality for improved services, network performance and subscription revenues. Introduction of Intelligent Networks (IN) has significantly enhanced network features and valued-added services available to the users.

With the advent of the IN, most of these services, such as call diversion, prepaid services and number portability, have moved out of the core switch equipment and into network nodes, thus creating a modular architecture which allows network operators and service providers to rapidly develop and flexibly deploy value-added services to their networks.

IN is typically an overlay of computer nodes onto the switching centres of a telecommunication or cellular network. Additional functionality is added to the core network such that it serves as a service switching point (SSP). The SSP can be triggered by some characteristics of an incoming or outgoing call to send call associated data to a service control point (SCP) on the IN. The SCP comprises service logic which determines how the request is processed. The SCP then returns the related information back to the SSP to complete execution of the service and to handle the call accordingly.

Said IN computer logic can be realized using discrete and separate computers. Such IN logic can also be built into network components, such as a Mobile Switching Centres (MSC).

Most IN implementations within a telecommunications network are in the form of overlaid networks with signalling system 7 (SS7) interfaces.

Call gapping may be used to alleviate network overload when there is a surge in traffic volume for a particular IN service due to, for example, a sharp rise in the demand for some services in unscheduled mass-call events, or when disasters strike. Severe network overload may paralyze communication services. When call gapping is activated during periods of network congestion, either a proportion of all incoming calls, or a proportion of all calls from a particular source are stopped at the source upon receiving the corresponding call-gap instructions from the IN.

Customized Applications for Mobile Enhanced Logic (CAMEL) is a 3GPP (3rd Generation Partnership Project) standard which enables interworking of IN with GSM and GPRS (General Packet Radio System) networks. CAMEL specifies call-gapping mechanism for circuit-switched calls. However, said standardized call gapping mechanism is not applicable to packet-switched calls.

Packet-switched communications enjoy increasing popularity as it is widely supported by mobile stations and devices. Moreover, transmission of data packets makes more efficient utilization of the available communication capacity.

McDonald et al. discloses in application US2006/ 0121905 a method of using mobile stations capable of executing a call gapping process for reducing GSM and GPRS network congestion.

Schwartz et al. discloses in US 5 862 334 the use of a mediation point between network service switching points and third party service control points SCP for network overload management.

The present application provides methods and systems for advanced call traffic control.

A first method of call traffic control during network overload in a wireless telecommunication network is provided. The wireless telecommunication network comprises a core network and an intelligent network. The core network comprises a packet-switched subsystem for handling packet-switched calls. The first method comprises the steps of detecting a user trigger set by the core network, detecting network load status by the intelligent network, sending at least one call-gap message from the intelligent network to the core network upon detection of network overload, and activating and executing call traffic control by the core network in accordance with the content of the at least one call-gap message.

The first method may comprise the at least one call-gap message being sent from a service control point in the intelligent network to at least one service switching function of the core network. The at least one call-gap message may also comprise information elements used by the service switching function to determine call traffic control criteria and processes for execution by the core network during network overloads.

The at least one service switching function SSF may comprise a packet-switched SSF. The first method may further comprise the steps of examining call gap criteria in the information elements by the packet-switched SSF, and determining whether the packet-switched calls are rejected by the core network during network overloads.

The first method may comprise the core network rejecting the packet-switched calls if the name of the called access point associated with an incoming call is listed in the call gap criteria.

The core network may further comprise a circuit-switched subsystem for handling circuit-switched calls. The at least one service switching function SSF may comprise a circuit-switched SSF and the packet-switched SSF. The first method may further comprise the service control point sending at least one call-gap message to the circuit-switched SSF upon detection of network overload, the circuit-switched SSF determining if the at least one call-gap message comprises an information element having the name of called access point as one of the gap criteria, and the circuit-switched SSF activating and executing rejection of switched-circuit calls if the at least one call-gap message does not comprise the information element having the name of called access point as one of the gap criteria, with the call rejections being executed in accordance with the information elements of the at least one call-gap message during network overloads.

The first method may comprise the circuit-switched SSF further activating and executing rejection of packet-switched calls if the at least one call-gap message comprises information element having the name of called access point as one of the gap criteria.

The first method may also comprise the gap message being forwarded from the circuit-switched SSF to the packet-switched subsystem for blocking the transmission of an initial detection point message.

The at least one service switching function SSF may comprise a circuit-switched SSF and the packet-switched SSF. The first method may further comprise the service control point sending at least one call-gap message to the circuit-switched SSF upon detection of network overload, and the circuit-switched SSF examining the value of a release cause, which is an information element representing the pre-coded reason for call rejection, and the circuit-switched SSF further activating and executing circuit-switched call processing in accordance with the information elements of the at least one call-gap message during network overloads.

The first method may comprise the circuit-switched SSF activating and executing circuit-switched call processing by suppressing trigger information and disabling circuit-switched call handling by the service control point during network overloads if the value of the release cause is matched to a pre-determined value.

The first method may also comprise the circuit-switched SSF sending call detail recording tickets to the service control point for billing update when the network is not overloaded.

The first method can comprise the circuit-switched SSF sending call detail recording tickets for billing update at a time stored in the release cause.

A second method of call traffic control during network overload in a wireless telecommunication network is also provided. The wireless telecommunication network comprises a core network and an intelligent network, and the core network further comprises a circuit-switched subsystem for handling circuit-switched calls. The second method comprises the steps of detecting a user trigger set by the core network, detecting network load status by the intelligent network, sending at least one call-gap message by the intelligent network to the core network upon detection of network overload, and activating and executing call traffic control by the core network in accordance with the content of the at least one call-gap message.

The second method may comprise the at least one call-gap message being sent from a service control point in the intelligent network and received by a circuit-switched switching function of the core network. The at least one call-gap message comprises information elements used by the service switching function to determine whether the circuit-switched calls are processed by the core network during network overloads.

The second method may comprise the service control point sending at least one call-gap message to the circuit-switched SSF upon detection of network overload, and the circuit-switched SSF examining the value of the release cause, which is an information element representing the pre-coded reason for call rejection, and the circuit-switched SSF further activating and executing circuit-switched call processing by suppressing trigger information and disabling circuit-switched call handling by the service control point during network overloads if the value of the release cause is matched to a pre-determined value.

The second method may also comprise the circuit-switched SSF sending call detail recording tickets to the service control point for billing update when the network is not overloaded.

The second method can comprise the circuit-switched SSF sending call detail recording tickets for billing update at a time stored in the release cause.

The wireless telecommunication network can be in the form of the Global System Mobile network (GSM). The packet-switched subsystem can be in the form of the General Packet Radio System (GPRS), and the packet-switched calls can be GPRS calls. The circuit-switched service switching function may be interfaced with a mobile switching centre in the GSM subsystem of the core network. The packet-switched service switching function can be interfaced with a serving GPRS support node in the GPRS subsystem of the core network, and the intelligent network being in a state of network overload when the available network resource level is less than a pre-determined fraction of the total network resource.

A first system for call traffic control during network overload in a wireless telecommunication network is provided. The first system comprises a core network for handling calls, an intelligent network for processing call-related services including detection of network load status. The core network further comprises a circuit-switched subsystem and a packet-switched subsystem interfaced respectively with a circuit-switched service switching function SSF and a packet-switched SSF, which receive at least one call-gap message from a service control point of the intelligent network for call traffic control upon detection of network overload.

The at least one call-gap message may comprise information elements. The information elements may comprise gap criteria under which packet-switched calls are rejected. The gap criteria may comprise the name of at least one called access point. The service control point sends the at least one call-gap message to at least one of the switch circuit functions for determining whether the packet-switched calls are rejected.

The information elements may comprise a release cause value. The circuit-switched SSF activates and executes circuit-switched call processing by suppressing trigger information and disabling circuit-switched call handling by the service control point during network overloads if the release cause value is matched to a pre-determined value.

A second system for call traffic control during network overload in a wireless telecommunication network is provided. The second system comprises a core network for handling calls, an intelligent network for processing call-related services including detection of network load status. The core network further comprises a circuit-switched subsystem interfaced with a circuit-switched service switching function, SSF, which receives at least one call-gap message from a service control point of the intelligent network for enabling call processing upon detection of network overload.

The at least one call-gap message may comprise information elements. The information elements may comprise a release cause value. The circuit-switched SSF activates and executes circuit-switched call processing by suppressing trigger information and disabling circuit-switched call handling by the service control point during network overloads if the release cause value is matched to a pre-determined value.

The wireless telecommunication network may be in the form of the Global System Mobile (GSM) network. The packet-switched subsystem may be in the form of the General Packet Radio System GPRS, and the packet-switched calls being GPRS calls.

The present application provides an innovative GPRS call gapping mechanism based on enhanced call-gap messages, which comprise information elements incorporated in a call gap message, or a plurality of enhanced GPRS call gap message, used between the overlaid IN system and the GSM and GPRS network.

In addition, the present application provides a second set of enhanced call-gap messages for allowing core networks to process calls even when the IN is overloaded. This can lead to boosted service continuity and revenue.
- FIG. 1: illustrates a GSM cellular communication system with an intelligent network (IN) overlay,
- FIG. 2: illustrates an operational flow of a call gapping process executed by the IN-enabled GSM system of FIG. 1,
- FIG. 3: illustrates a first embodiment of a set of enhanced call-gap information elements, which comprise in- formation elements incorporated in a call gap mes- sage, for implementing GPRS call gapping for the process of FIG. 2,
- FIG. 4: illustrates an operational flow of GPRS call gap- ping employing the additional GPRS-related call-gap information elements of FIG. 3,
- FIG. 5: illustrates a second embodiment of a set of GPRS call-gap information elements for implementing GPRS call gapping for the process of FIG. 2,
- FIG. 6: illustrates an operational flow of GPRS call gap- ping employing the GPRS call-gap information ele- ments of FIG. 5,
- FIG. 7: illustrates a third embodiment of a set of call Gap Treatment information elements for enabling call processing during network overload for the IN- enabled GSM system of FIG. 1, and
- FIG. 8: illustrates an operational flow of call blocking suppression employing the call Gap Treatment infor- mation elements of FIG. 7.

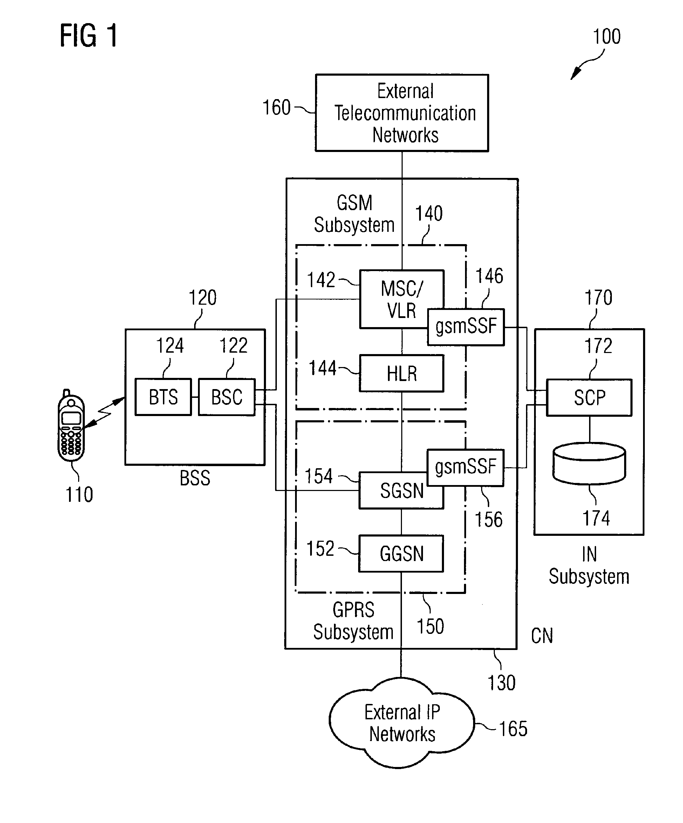

FIG. 1 shows a GSM (Global System for Mobile Communications) system 100 integrated with an intelligent network (IN) subsystem 170. A description of the GSM system 100 is disclosed in "3rd Generation Partnership Project (3GPP)", www.3gpp.org.

The GSM system 100 comprises a core network (CN) 130, a base station subsystem (BSS) 120, and the IN 170.

The CN 130 further comprises a GSM subsystem 140 and a general packet radio subsystem (GPRS) 150.

The GSM network 140 comprises a visitor location register (VLR) and mobile switching centre (MSC) 142 which is in communication with a home location register (HLR) 144. The MSC 142 interfaces with external telecommunication networks 160, such as public switched telephone networks (PSTN). The MSC 142 is in communication with the BSS 120. The MSC 142 is in further communication with the IN 170 by means of GSM service switching function (gsmSSF) 146.

The GPRS subsystem 150 comprises a serving GPRS support node (SGSN) 154, which is in communication with a gateway GPRS support node (GGSN) 152 and the BSS 120. The SGSN 154 is in further communication with the IN 170 by means of GPRS service switching function (gprsSSF) 156. The GGSN 152 interfaces with external IP networks 165.

The IN subsystem 170 comprises a service control point (SCP) 172 which is in communication with the gsmSSF 146 and the gprsSSF 156. The SCP 172 is in further communication with a database 174, which stores subscriber and other data required for call and service processing.

The BSS 120 comprises a base station controller (BSC) 122 which is in communication with at least one base transceiver station (BTS) 124. The BTS 124 establishes and maintains air interface with a plurality of user mobile stations (MS) 110.

Without loss of generality, the cellular system 100 is a type of a wireless telecommunication network. The wireless telecommunication network can be in the form of Global System Mobile (GSM) network or a type of the third-generation mobile network. The general packet radio subsystem (GPRS) 150 is a form of a packet-switched subsystem (150).

The CN 130 in the IN-enabled cellular system 100 comprises a circuit-switched communication network such as GSM 140 and a packet-switched network such as GPRS 150. The CN 130 may be a type of the third-generation mobile network.

The gsmSSF 146 can be a computer logic or an application being executed in the MSC system 142. Alternatively, the gsmSSF 146 may be executed on a separate computer or appliance system which is in communication with the MSC 142.

The gprsSSF 156 can be a computer logic or application being executed in the SGSN system 154. The gprsSSF 156 may also be executed on a separate computer or appliance system which is in communication with the SGSN 154.

The IN 170 may comprise other subsystems and modules necessary for its execution of network services. The IN 170 may comprise a specialized resource function (SRF) which may be in communication with the gsmSSF 146, the gprsSSF 156 and the SCP 172 for delivering additional service applications, such as voice announcement.

The external IP networks 165 may comprise the Internet, virtual private networks or other operators' IP networks. The external telecommunication networks 160 may comprise public switch telephone networks, other operators' mobile networks, or Integrated Services Digital Networks.

The GSM system 100 may comprise more than one BSS 120. The BSS 120 may comprise a plurality of the BSC 122 and the BTS 124.

The MS 110 can be in the form of a mobile telephone, personal digital assistant, embedded device, or computing equipment that support GSM, GPRS or 3G cellular connectivity.

The BSS 120 manages and handles traffic and signaling between the MS 110 and the CN 130. The main tasks of the BSC 122 comprise channel allocation, control of the BTS 124 handovers, transmission of voice signals, data packets, messages and other control signals. The BTS 124 comprises transceiver equipment for transmitting and receiving of radio signals which carry voice, data, messages, signaling and other information exchanged between the MS 110 and the CN 130.

The MS 110, as provided here, is a cellular device that undertakes the transmission, reception, modulation, encoding and other processing tasks associated with said radio signals.

The MSC 142, as provided here, is a core subsystem in the GSM network 140. The MSC 142 interfaces with external telecommunication networks 160 to enable circuit-switched mobile-to-mobile and mobile-to-PSTN communications. In addition, the MSC 142 provides mobility management and it keeps track of user locations through the two registers VLR 142 and HLR 144.

The VLR 142 includes a temporary database of the MS 110, which have roamed into cells that are served by the BSS 120. The HLR 144 is accessed by both the MSC 142 and the SGSN 154. The HLR 144 includes a central database that stores the profiles of the authorized MS 110 users.

The key tasks of SGSN 154 comprise packet routing and transfer to and from the MS 110, mobility management, link management, authentication and charging functions. The GGSN 152 serves as an interface between the SGSN 154 and the external IP networks 165. The SGSN 154 translates between GPRS packets and IP packets, which are transported over the external IP networks 165.

The IN 170 supports Customized Applications for Mobile network Enhanced Logic as shown in 3gpp TS 23.078. The IN 170 handles the signaling traffic that originates from the MSC 142 of the CN 130. The gsmSSF 146 and the gprsSSF 156 interface the MSC 142 and the SGSN 154 respectively to the SCP 172. When encountering detection points (DP) in the course of system processing, the gsmSSF 146 and the gprsSSF 156 may notify and transfer control to the SCP 172. The conditions under which said notification and transfer of control occurs are called trigger criteria. The trigger criteria are defined by operators and they comprise user profiles and service keys.

The IN 170 provides mechanisms to support services of operators which are not covered by standardized services. The SCP 172 comprises service logics, which execute service applications in accordance with the type of queries, service keys and other data stored in the database 174.

The communication protocol between the gsmSSF 146, the gprsSSF 156 and the SCP 172 includes Signaling System 7 (SS7) and CAMEL Application Part (CAP). The standards of the SS7 and the CAP are disclosed in www.itu.int and www.3gpp.org, respectively.

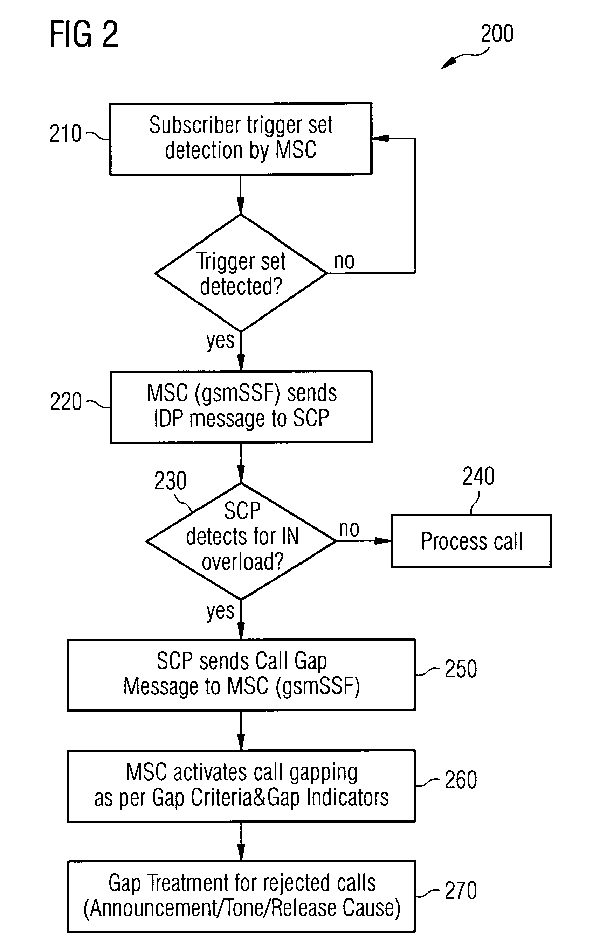

FIG. 2 shows an operational flow 200 of a call gapping process executed by the IN-enabled GSM system of FIG. 1. The call gapping is for alleviating network overload when traffic load exceeds a pre-determined level of network capacity. A call gapping function for GSM or 3G cellular networks is disclosed in 3GPP TS 23.078.

The call gapping process begins with step 210 in which call or service requests are continually monitored. Upon the detection of a match between a subscriber trigger set and a plurality of pre-determined triggering criteria, the process advances to step 220 wherein the gsmSSF 146 sends an IDP (initial detection point) message to the SCP 172 in the IN 170.

The SCP 172 monitors the IN 170 loading state in step 230. The SCP 172 proceeds to call processing if said network load evaluated in step 230 is below a pre-determined level of network resource. In addition, the SCP 172 may proceed to call processing if there are no active or incomplete call-gapping processes or periods.

When the IN 170 is unable to process any further calls as a result of an overload situation, a network overload status is detected in step 230 and the SCP 172 returns a call gap message to the gsmSSF 146 and the MSC 142. In accordance with the "Gap Criteria", "Gap Indicators", and "Gap Treatment" information elements (IE) in the call gap message, the gsmSSF 146 activates call gapping in step 260 and proceeds to perform the required call treatment in step 270.

The "Gap Indicators" IE specifies the gapping characteristics (gapping duration and interval) whereas said "Gap Treatment" IEs indicate how call requests that have been rejected due to the call gapping condition should be treated.

Said call treatment predominantly invokes the transmission of release cause during the call gap or overload periods, and making announcement or playing alert tone to the user MS 110.

The call gapping is usually effective in rejecting circuit-switched call requests during network overload. The call gapping mechanism for CAP is based on 3GPP TS 23.078 standard, which requires that the rejection of circuit-switched calls be based upon service key values, called or called address during the call gap periods. The standard further specifies announcement to be made, alert tone to be played or appropriate release cause to be sent.

During a call-gap or overload period, a GPRS call reaching the SGSN 154 triggers the gprsSSF 156 to send an IDP GPRS message to the SCP 172. Even though a call gap message is sent (250) from the SCP 172 indicating that the IN 170 is unable to process further load, said GPRS call is still processed.

The gap treatment of rejected calls includes the transmission of a voice announcement or a tone to the user MS 110.

In general, call gap messages can also be triggered directly, without the use of the IDP 220 or any external influence, by the IN 170, which determines the load situation at pre-determined intervals by means of network load evaluation against some pre-determined criteria. The GPRS call is a form of packet-switched calls.

The call-gap message comprises information elements used by the service switching function 146, 156 to determine call traffic control criteria and processes for execution by the core network 130 during network overloads.

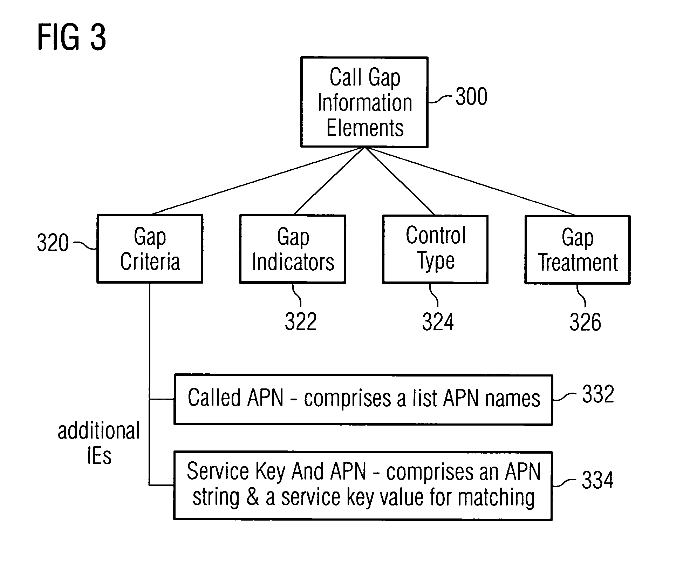

FIG. 3 illustrates a first embodiment of a set of enhanced call-gap information elements 300, which comprise information elements incorporated in a call gap message, for implementing GPRS call gapping for the process of FIG. 2.

The call-gap IEs 300 comprises elements of a "Gap Criteria" IE 320, a "Gap Indicators" IE 322, a "Control Type" IE 324, and a "Gap Treatment" IE 326 specified by 3GPP TS 23.078, with additional IEs employed in the "Gap Criteria" IE 320.

Said additional information elements includes "Called APN" IE 332 which comprises a list of GPRS APNs (access point names), and "Service Key And APN" IE 334 which includes a service key and name of the GPRS access point.

The individual elements of call-gap IE 300 are listed below.

The "Gap Criteria" IE 320 is mandatory and it specifies the criteria for a call to be subject to call gapping. The "Gap Indicators" IE 322 is mandatory and it specifies the gapping characteristics. The "Control Type" IE 324 is optional and it indicates the reason for activating call gapping. The "Gap Treatment" IE 326 is optional and it indicates how calls that were rejected due to the call gapping condition and have Default Call Handling as "Release Call" shall be treated.

The Default Call Handling indicates whether the call shall be released or continued as requested.

The "Gap Criteria" IE 320 includes either "Basic Gap Criteria" IE or "Compound Gap Criteria" IE, both of which are optional and mutually exclusive. The "Basic Gap Criteria" IE is for storing a choice of various basic criteria whereas the "Compound Gap Criteria" IE is for storing a choice of various criteria including a gsmSCF ID.

The gsmSCF is the functional entity of the SCP 172, and gsmSCF ID has the address of the gsmSCF which initiated the Call Gapping. The address is also called identity code.

The Compound Gap Criteria includes "Basic Gap Criteria", which is mandatory, and "gsmSCF ID" which is optional.

The "Basic Gap Criteria" IE includes a "Called Address" IE, a "Service" IE, a "Called Address And Service" IE, a "Calling Address And Service" IE, and a "Called APN" IE 332.

The "Called Address" IE, which is optional and mutually exclusive, includes a string of digits. For each call attempt where the leading digits of the dialled number match this specific value, the call gapping treatment shall be applied to the call.

The "Service" IE, which is optional and mutually exclusive, includes a service key value. For each call attempt where the service key matches this specific value, the call gapping treatment shall be applied to the call.

The "Called Address And Service" IE, which is optional and mutually exclusive, includes a specific string of digits and a service key value. For each call attempt where the leading digits of the dialled number and the service key of a call match these specific values, the call gapping treatment shall be applied to the call.

The "Calling Address And Service" IE, which is optional and mutually exclusive, has a specific string of digits and a service key value. For each call attempt where the leading digits of the calling party number and the service key match these specific values, the call gapping treatment shall be applied to the call.

The "Called APN" 332 IE, which is optional, includes a list of GPRS APN names.

A "Service Key and APN" IE 334, which is optional, includes a specific string of APN values and a service key value. For each call attempt where the APN called and the service key of a call match these specific values, the call gapping treatment shall be applied to the call.

The "Gap Indicators" IE 322 includes a "Duration" IE, which is mandatory and it specifies the total time interval during which call gapping for the specified Gap Criteria will be active. A duration of 0 indicates that gapping is to be removed, and a duration of -2 indicates a network specific duration. Other values indicate the duration in seconds. The "Gap Indicators" IE 322 further includes an "Interval" IE, which is mandatory and it specifies the minimum time between calls being allowed through. An interval of 0 indicates that calls meeting the Gap Criteria are not to be rejected, whereas an interval of -1 indicates that all calls meeting the Gap Criteria are to be rejected. Other values indicate the interval in milliseconds.

The "Gap Treatment" IE 326 includes either "Information To Send" IE or "Release Cause" IE, both which are optional and mutually exclusive. "Information To Send" IE indicates an announcement or a tone to be sent to the calling party. At the tone or announcement, the call shall be released, whereas "Release Cause" IE indicates the specific cause value to be sent in the Release information flow (IF) if the call is to be released. The release coding is specified in ETSI EN 300 356-1.

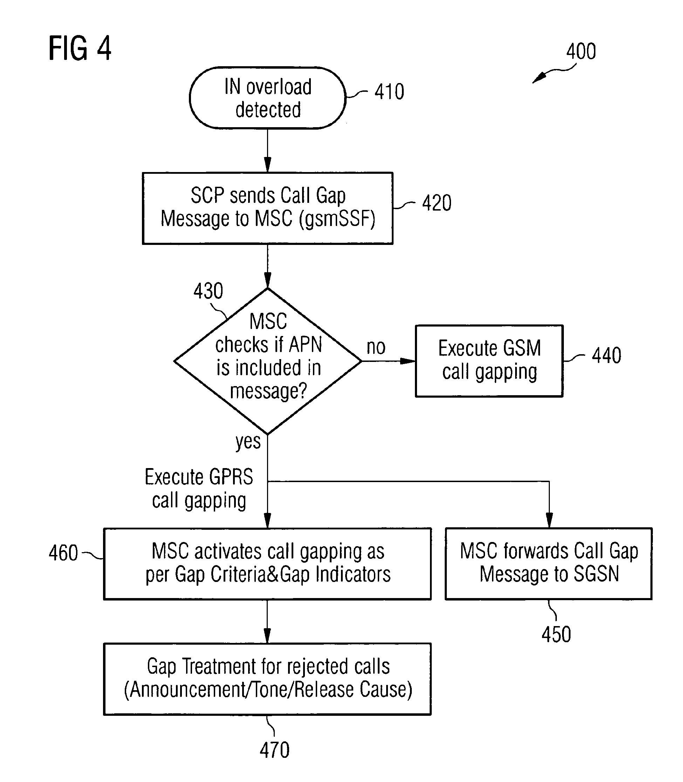

FIG. 4 illustrates an operational flow 400 of GPRS call gapping employing the additional GPRS-related call-gap information elements 300 of FIG. 3,

The SCP 172 measures the network loading state in step 410. If IN network overload is detected, the SCP 172 returns a call gap message to the gsmSSF 146 and MSC 142. The MSC 142 further checks if the called APN is included in said call gap message.

A negative outcome of step 430 leads to the execution of a GSM call gapping in step 440. The GSM call gapping is illustrated in FIG. 2.

A positive outcome of step 430 represents that GPRS call gapping is required. In accordance with the "Gap Criteria" IE, "Gap Indicators" IE, and "Gap Treatment" IE in the call gap message, the gsmSSF 146 activates call gapping in step 460 and proceeds to perform the required call treatment in step 470.

If the corresponding call parameters match the APN and service key defined in the Gap Criteria 320, the MSC 142 forwards the call gap message to the SGSN 154 in step 450. Upon receiving said call gap message, the SGSN 154 blocks the IDP GPRS and stops it from being sent

The inclusion of GPRS APN as the IE in the Gap Criteria 320 enables selective barring of specific APN.

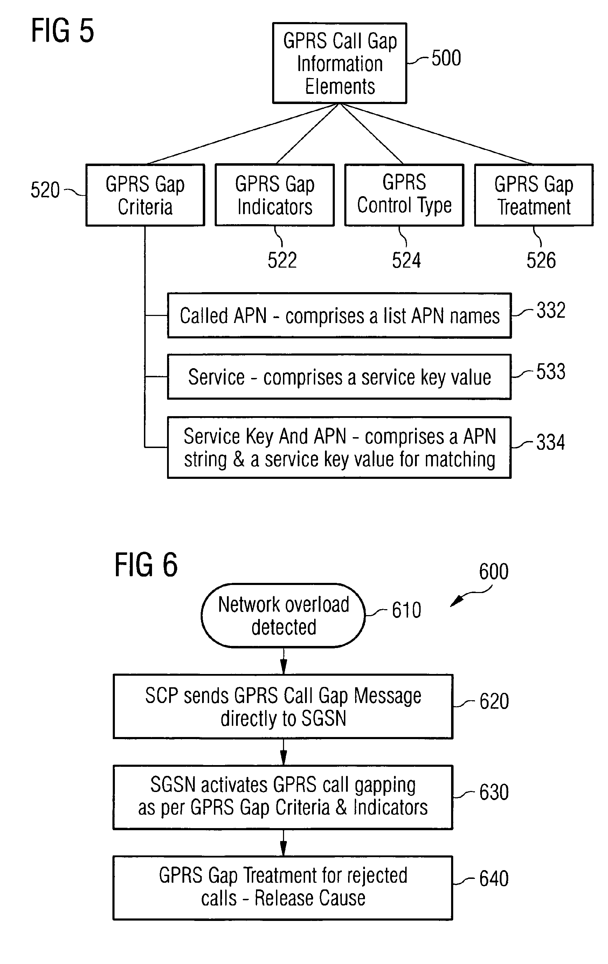

FIG. 5 illustrates a second embodiment of GPRS call-gap information elements 500 for implementing GPRS call gapping for the process of FIG. 2,

The call-gap IEs 500 comprise a "GPRS Gap Criteria" IE 520, a "GPRS Gap Indicators" IE 522, a "GPRS Control Type" IE 524, and a "GPRS Gap Treatment" 526.

The individual elements of the GPRS call-gap IE 500 are listed below.

The "GPRS Gap Criteria" IE 520 is mandatory and it specifies the criteria for a call to be subject to call gapping. The "GPRS Gap Indicators" IE 522 is mandatory and it specifies the gapping characteristics. The "GPRS Control Type" IE 524 is optional and it indicates the reason for activating call gapping. The "GPRS Gap Treatment" IE 526 is optional and it indicates how calls that were rejected due to the call gapping condition and have Default Call Handling as "Release Call" shall be treated.

The Default Call Handling indicates whether the call shall be released or continued as requested.

The "GPRS Gap Criteria" IE 520 includes either "Basic Gap Criteria" IE or "Compound Gap Criteria" IE, both of which are optional and mutually exclusive. The "Basic Gap Criteria" IE is for storing a choice of various basic criteria whereas "Compound Gap Criteria" IE is for storing a choice of various criteria including a gsmSCF ID.

The gsmSCF is the functional entity of the SCP 172. Said gsmSCF ID includes the address of the gsmSCF which initiated the Call Gapping.

The "Compound Gap Criteria" IE includes "Basic Gap Criteria" IE which is mandatory, and "gsmSCF ID" IE which is optional.

The "Basic Gap Criteria" IE includes a "Called APN" IE 332, a "Service" IE 533 which indicates the service key value, or a "Service Key and APN" IE 334

The "Called APN" IE 332, which is optional and mutually exclusive, includes a list of GPRS APN names.

The "Service" IE 533, which is optional and mutually exclusive, includes a service key value. For each call attempt where the service key matches this specific value, the call gapping treatment shall be applied to the call.

The "Service Key and APN" IE 334, which is optional and mutually exclusive, includes a specific string of APN values and a service key value. For each call attempt where the APN called and the service key of a call match these specific values, the call gapping treatment shall be applied to the call.

The "GPRS Gap Indicators" IE 522 includes a "Duration" IE, which is mandatory, specifies the total time interval during which call gapping for the specified Gap Criteria will be active. A duration of 0 indicates that gapping is to be removed, and a duration of -2 indicates a network specific duration. Other values indicate the duration in seconds. The "GPRS Gap Indicators" IE 522 further includes a "Interval" IE, which is mandatory, specifies the minimum time between calls being allowed through. An interval of 0 indicates that calls meeting the Gap Criteria are not to be rejected, whereas an interval of -1 indicates that all calls meeting the Gap Criteria are to be rejected. Other values indicate the interval in milliseconds.

The "GPRS Gap Treatment" IE 526 includes a "Release Cause" IE, which is mandatory. The "Release Cause" IE indicates the specific cause value to be sent in the Release information flow (IF) if the call is to be released. A new release cause for GPRS is defined as 010 1101 which equals to 45.

FIG. 6 illustrates an operational flow 600 of GPRS call gapping employing the GPRS call-gap information elements 500 of FIG. 5,

The SCP 172 measures the network loading state in step 610. If a network overload is detected, the SCP 172 sends a GPRS call gap message comprising the "GPRS call-gap" IE 500 directly to the SGSN 154 in step 620.

In accordance with the GPRS Gap Criteria 520, the "GPRS Gap Indicators" IE 522 and the "GPRS Gap Treatment" IE 526 in the call gap message, the gprsSSF 156 activates call gapping in step 630 and proceeds to perform the required call treatment in step 640.

The GPRS call-gap IEs 500 allow a direct call gap message to be sent from the SCP 172 to the SGSN 154 of the GPRS subsystem 150 for performing call gapping, thereby creating a call gap period at the SGSN 154.

The inclusion of GPRS APN as the IE in the "GPRS Gap Criteria" IE 520 enables selective barring of specific APN.

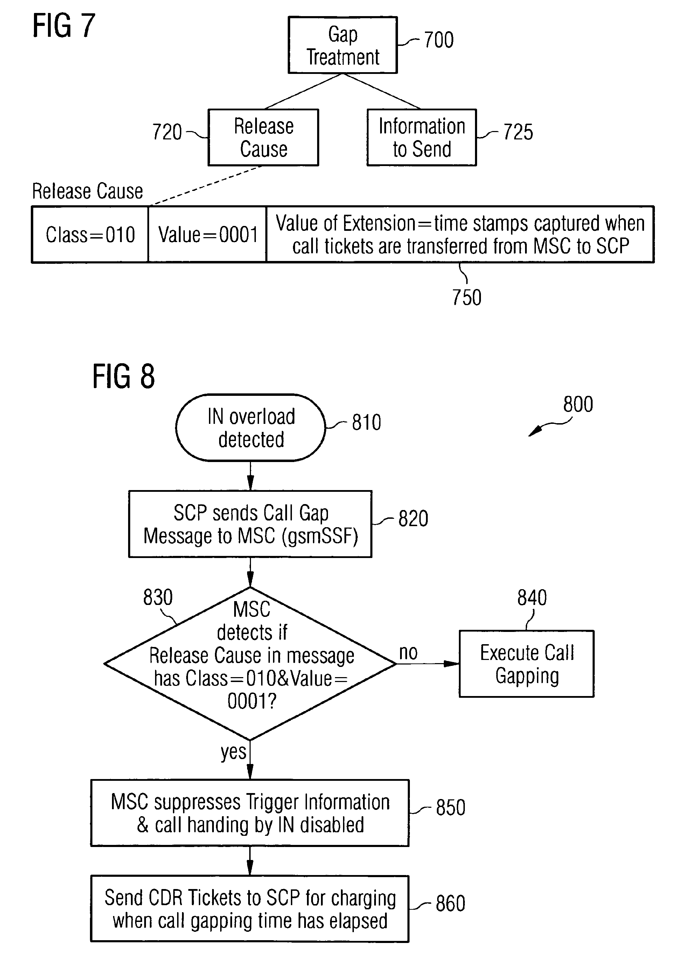

Call gapping serves to prevent the IN-enabled GSM system 100 from further overloading and possible network failure. Nonetheless, call gapping results in service disruption and lower revenues. The information elements and process described in FIGS. 7 and 8 allow core networks to process calls even when the IN is overloaded.

FIG. 7 illustrates a third embodiment of "call Gap Treatment" information elements 700 for allowing call processing during network overload for the IN-enabled GSM system of FIG. 1,

The "call Gap Treatment" IE 700 includes a "Information To Send" IE 725, which is optional and mutually exclusive and it indicates an announcement or a tone to be sent to the calling party. At the tone or announcement, the call shall be released. The "call Gap Treatment" IE 700 further includes a "Release Cause" IE 720, which is optional and mutually exclusive and it indicates the specific cause value to be sent in the Release information flow (IF) if the call is to be released.

A new release cause 720 is used to indicate to the MSC 142 that the IN 170 is overloaded, call blocking is disabled at the CN 130 and call handling by the SCP 172 is disabled. The release cause 720 is assigned 010 as the class and 0001 as its value (i.e. release code = 33).

The release cause 720 further comprises extension bits having value representing the time stamp captured when call tickets are transferred from the MSC 142 to the SCP 172 for billing purpose.

The "Information To Send" IE includes either "In-band Info" or "Tone", both of which are optional and mutually exclusive. The "Tone" specifies a tone to be sent to the end-user. The "In-band Info" includes a "Message ID" IE, which is mandatory and it indicates the message(s) to be sent. The "In-band Info" further includes a "Message Duration" IE, which is optional and it indicates the maximum time in seconds that the message shall be played or repeated. ZERO indicates endless repetition.

FIG. 8 illustrates an operational flow 800 of call blocking suppression employing the call Gap Treatment information elements 700 of FIG. 7.

When network overload is detected in step 810, the SCP 172 sends a call gap message to the gsmSSF 146 and the MSC 142. The MSC 142 proceeds, in step 830, to detect if the release cause 720 has 010 as its class and 0001 as its value.

A negative outcome in step 830 indicates that, as shown in step 840, call gapping should be executed.

If the release code is 33, the MSC 142 suppresses and ignores any trigger information and call handling by the IN 170 is disabled.

When the call gapping time has elapsed, the MSC 142 sends call detail recording (CDR) tickets to the SCP 172 or an appropriate mediation device for billing update.

Depending upon the time value defined in the Value of Extension 750, the CDR in step 860 could optionally be transferred to the IN 170 or a mediation device at said time value.

The process 800 provides a unique option to network providers for processing calls even when the IN 170 is overloaded. As a result, service continuity is ensured and revenue is boosted.

In summary, the above embodiments shows a GPRS call gapping mechanisms based on enhanced call-gap messages, with the feature of selective barring of specific APN (GPRS access point name). The embodiments also shows enhanced call-gap IEs for allowing core networks to process calls even when the IN is overloaded. This can boost service continuity and revenue.

### Abbreviations

- 3GPP: 3rd Generation Partnership Project
- APN: access point name
- BSS: base station subsystem
- CAMEL: Customized Applications for Mobile Enhanced Logic
- CAP: CAMEL Application Part
- CDR: call detail recording
- CN: core network
- DP: detection points
- GGSN: gateway GPRS support node
- GPRS: general packet radio system
- gprsSSF: GPRS service switching function
- GSM: Global System for Mobile Communications
- gsmSSF: GSM service switching function
- HLR: home location register
- IDP: initial detection point
- IE: information elements
- IF: information flow
- IN: intelligent network
- MS: mobile stations
- PSTN: public switched telephone networks
- SCP: service control point
- SGSN: serving GPRS support node
- SRF: specialized resource function
- SS7: Signaling System 7
- VLR: visitor location register

### Reference Numbers

- 100: IN-enabled GSM system
- 110: mobile stations (MS)
- 120: base station subsystem (BSS)
- 122: base station controller (BSC)
- 124: base transceiver station BTS
- 130: core network CN
- 140: GSM subsystem
- 142: mobile switching centres (MSC)
- 144: home location register (HLR)
- 146: GSM service switching function (gsmSSF)
- 150: GPRS subsystem
- 152: gateway GPRS support node (GGSN)
- 154: serving GPRS support node (SGSN)
- 156: GPRS service switching function (gprsSSF)
- 160: external telecommunication networks
- 165: external IP networks
- 170: IN subsystem
- 172: service control point (SCP)
- 174: database

- 200: operational flow of call gapping process
- 210: MSC detection
- 220: MSC sends IDP message to SCP
- 230: SCP detects for network overload
- 240: connect call
- 250: SCP sends call-gap message to MSC
- 260: MSC activates call gapping as per Gap Indicators
- 270: Gap Treatment for rejected calls

- 300: call gap IE
- 320: Gap Criteria
- 322: Gap Indicators
- 324: Control Type
- 326: Gap Treatment
- 332: called APN
- 334: service key & APN

- 400: GPRS call gapping employing call gap IE 300
- 410: network overload detected
- 420: SCP sends call gap message to MSC
- 430: MSC checks if APN is listed in Gap Criteria
- 440: execute GSM call gapping
- 450: MSC forwards call gap message to SGSN
- 460: MSC activates call gapping
- 470: Gap Treatment for rejected calls

- 500: GPRS call gap IE
- 520: GPRS Gap Criteria
- 522: GPRS Gap Indicators
- 524: GPRS Control Type
- 526: GPRS Gap Treatment
- 533: Service (key)

- 600: GPRS call gapping employing call gap IE 500
- 610: network overload detected
- 620: SCP sends GPRS call gap message to SGSN
- 630: activate GPRS call gapping as per GPRS Gap Indi- cators
- 640: GPRS Gap Treatment

- 700: Gap Treatment IE
- 720: release cause
- 725: information to send
- 750: release cause 33

- 800: disabling call blocking using Gap Treatment IE (700)
- 810: network overload detected
- 820: SCP sends call gap message to MSC
- 830: detect if release cause = 33
- 840: execute call gapping
- 850: MSC suppresses trigger information & call handled by the core network
- 860: send CDR tickets to SCP for charging

## Claims

1. A method of call traffic control during network overload in a wireless telecommunication network (100),
wherein the wireless telecommunication network (100) comprises a core network (130) and an intelligent network (170), and the core network (130) comprises a packet-switched subsystem (150) for handling packet-switched calls, and the method comprising the steps of
detecting a user trigger set by the core network (130), detecting network load status by the intelligent network (170),
sending at least one call-gap message (420, 620, 820) from the intelligent network (170) to the core network (130) upon detection of network overload, and
activating and executing call traffic control by the core network (130) in accordance with the content of the at least one call-gap message (420, 620, 820).

2. The method according to claim 1
**characterized in that**
the at least one call-gap message (420, 620, 820) being sent from a service control point (172) in the intelligent network (170) to at least one service switching function (146, 156) of the core network (130),
wherein the at least one call-gap message (420, 620, 820) comprises information elements (300, 500) used by the service switching function (146, 156) to determine call traffic control criteria and processes for execution by the core network (130) during network overloads.

3. The method according to claims 1 or 2
**characterized in that**
the at least one service switching function SSF comprising a packet-switched SSF (156), and the method further comprising the steps of
examining call gap criteria (520) in the information elements (500) by the packet-switched SSF (156), and determining whether the packet-switched calls are rejected by the core network (130) during network overloads.

4. The method according to claim 3
**characterized in that**
the core network (130) rejecting the packet-switched calls if the name of the called access point associated with an incoming call is listed in the call gap criteria (520, 332, 334).

5. The method according to claim 1 or 2
**characterized in that**
the core network (130) further comprising a circuit-switched subsystem (140) for handling circuit-switched calls,
the at least one service switching function SSF (146, 156) comprising a circuit-switched SSF (146) and the packet-switched SSF (156), and the method further comprising the service control point (172) sending at least one call-gap message (420) to the circuit-switched SSF (146) upon detection of network overload,
the circuit-switched SSF (146) determining if the at least one call-gap message (420) comprises an information element (300) having the name of called access point (332) as one of the gap criteria (320), and
the circuit-switched SSF (146) activating and executing rejection of switched-circuit calls if the at least one call-gap message (420) does not comprise the information element (300) having the name of called access point (332) as one of the gap criteria (320), with the call rejections being executed in accordance with the information elements (300) of the at least one call-gap message (420) during network overloads.

6. The method according to claim 5
**characterized in that**
the circuit-switched SSF (146) further activating and executing rejection of packet-switched calls if the at least one call-gap message (420) comprises information element (300) having the name of called access point (332) as one of the gap criteria (320).

7. The method according to claim 5
**characterized in that**
the gap message (420) being forwarded from the circuit-switched SSF (146) to the packet-switched subsystem (150) for blocking the transmission of an initial detection point message (450).

8. The method according to claim 1 or 2
**characterized in that**
the at least one service switching function SSF (146, 156) comprising a circuit-switched SSF (146) and the packet-switched SSF (156), and the method further comprising the service control point (172) sending at least one call-gap message (820) to the circuit-switched SSF (146) upon detection of network overload, and
the circuit-switched SSF (146) examining the value of a release cause (720), which is an information element representing the pre-coded reason for call rejection, and the circuit-switched SSF (146) further activating and executing circuit-switched call processing in accordance with the information elements of the at least one call-gap message (820) during network overloads.

9. The method according to claim 8
**characterized in that**
the circuit-switched SSF (146) activating and executing circuit-switched call processing by suppressing trigger information and disabling circuit-switched call handling by the service control point (172) during network overloads if the value of the release cause (720) is matched to a pre-determined value.

10. The method according to claims 8 or 9
**characterized in that** the circuit-switched SSF (146) sending call detail recording tickets to the service control point (172) for billing update when the network (170) is not overloaded.

11. The method according to claim 10
**characterized in that**
the circuit-switched SSF (146) sending call detail recording tickets for billing update at a time stored (750) in the release cause (720).

12. A method of call traffic control during network overload in a wireless telecommunication network (100),
wherein the wireless telecommunication network (100) comprises a core network (130) and an intelligent network (170), and the core network (130) further comprises a circuit-switched subsystem (140) for handling circuit-switched calls, and
the method comprising the steps of
detecting a user trigger set by the core network (130), detecting network load status by the intelligent network (170),
sending at least one call-gap message (820) by the intelligent network (170) to the core network (130) upon detection of network overload, and
activating and executing call traffic control by the core network (130) in accordance with the content of the at least one call-gap message (820).

13. The method according to claim 12
**characterized in that**
the at least one call-gap message (820) being sent from a service control point (172) in the intelligent network (170) and received by a circuit-switched switching function (146) of the core network (130),
wherein the at least one call-gap message (820) comprises information elements used by the service switching function (146, 156) to determine whether the circuit-switched calls are processed by the core network (130) during network overloads.

14. The method according to claim 12 or 13
**characterized in that**
the service control point (172) sending at least one call-gap message (820) to the circuit-switched SSF (146) upon detection of network overload, and
the circuit-switched SSF (146) examining the value of the release cause (720), which is an information element representing the pre-coded reason for call rejection, and
the circuit-switched SSF (146) further activating and executing circuit-switched call processing by suppressing trigger information and disabling circuit-switched call handling by the service control point (172) during network overloads if the value of the release cause (720) is matched to a pre-determined value.

15. The method according to claim 16
**characterized in that**
the circuit-switched SSF (146) sending call detail recording tickets to the service control point (172) for billing update when the network (170) is not overloaded.

16. The method according to claim 15
**characterized in that**
the circuit-switched SSF (146) sending call detail recording tickets for billing update at a time stored (750) in the release cause (720).

17. The method according to one of claims 1 to 15
**characterized in that**
the wireless telecommunication network (100) being in the form of the Global System Mobile network GSM (140),
the packet-switched subsystem (150) being in the form of the General Packet Radio System GPRS (150), and the packet-switched calls being GPRS calls,
the circuit-switched service switching function (146) being interfaced with a mobile switching centre (142) in the GSM subsystem (140) of the core network (130),
the packet-switched service switching function (156) being interfaced with a serving GPRS support node (154) in the GPRS subsystem (150) of the core network (130), and
the intelligent network being in a state of network overload when the available network resource level is less than a pre-determined fraction of the total network resource.

18. A system for call traffic control during network overload in a wireless telecommunication network (100) comprising a core network (130) for handling calls,
an intelligent network (170) for processing call-related services including detection of network load status, and the core network (130) further comprising a circuit-switched subsystem (140) and a packet-switched subsystem (150) interfaced respectively with a circuit-switched service switching function SSF (146) and a packet-switched SSF (156), which receive at least one call-gap message (420, 620) from a service control point (172) of the intelligent network (170) for call traffic control upon detection of network overload.

19. The system according to claim 18
**characterized in that**
the at least one call-gap message (420,620) comprising information elements (300, 500),
the information elements (300,500) comprise gap criteria (320,520) under which packet-switched calls are rejected, and the gap criteria (320,520) comprise the name of at least one called access point (332),
wherein the service control point (172) sends the at least one call-gap message (620) to at least one of the switch circuit functions (146, 156) for determining whether the packet-switched calls are rejected.

20. The system according to claims 18 or 19
**characterized in that**
the information elements (300, 500) comprising a release cause value (720),
wherein the circuit-switched SSF (146) activates and executes circuit-switched call processing by suppressing trigger information and disabling circuit-switched call handling by the service control point (172) during network overloads if the release cause (720) value is matched to a pre-determined value.

21. A system for call traffic control during network overload in a wireless telecommunication network (100) comprising a core network (130) for handling calls,
an intelligent network (170) for processing call-related services including detection of network load status, and
the core network (130) further comprising a circuit-switched subsystem (140) interfaced with a circuit-switched service switching function, SSF (146), which receives at least one call-gap message (820) from a service control point (172) of the intelligent network (170) for enabling call processing upon detection of network overload.

22. The system according to one of claim 21
**characterized in that**
the at least one call-gap message (820) comprising information elements, and
the information elements comprise a release cause value (720),
wherein the circuit-switched SSF (146) activates and executes circuit-switched call processing by suppressing trigger information and disabling circuit-switched call handling by the service control point (172) during network overloads if the release cause (720) value is matched to a pre-determined value.

23. The system according to one of claims 18 to 22 **characterized in that** the wireless telecommunication network (100) being in the form of the Global System Mobile GSM network (140), and
the packet-switched subsystem (150) being in the form of the General Packet Radio System GPRS (150), and the packet-switched calls being GPRS calls.
